# EUROPÄISCHE PATENTANMELDUNG

(11) **EP 1 096 347 A1**
(43) Veröffentlichungstag der Anmeldung: **02.05.2001**
(21) Anmeldenummer: 99121630.0
(22) Anmeldetag: 30.10.1999
(51) Int. Cl.: G05B 19/409, G05B 19/10

(54) **Integration unterschiedlicher Sensorik-/Aktorikelemente in ein einheitliches Steuersystem**

(71) Anmelder: TLC Transport-, Informatik- u. Logistik-Consulting GmbH, 10179 Berlin (DE)
(72) Erfinder: Dreke, Detlef Dipl.-Informatiker, 63846 Laufach (DE); Strauss, Burkhardt Dipl.-Math., 61267 Neu-Anspach (DE)
(74) Vertreter: Stenger, Watzke & Ring Patentanwälte

(57) **Zusammenfassung**

Um ein Verfahren bereitzustellen, welches eine Integration einer großen Vielzahl völlig unterschiedlicher Sensorik-/Aktorikelemente einer gegebenen Infrastruktur in ein einheitliches Steuersystem ermöglicht und somit die Bedienung, Ansteuerung sowie gegebenenfalls Diagnostik in bezug auf die in das System integrierten Einheiten vereinheitlicht und erheblich vereinfacht, wird mit der Erfindung vorgeschlagen ein Verfahren zur Integration unterschiedlicher Sensorik/Aktorikelemente einer gegebenen Infrastruktur mit voneinander verschiedenen Schnittstellen und Ansprechverfahren in ein einheitliches Steuersystem, wobei eine einheitliche funktionsorientierte Ansteuerung einer Vielzahl von sensorik/aktorikelementebezogenen Endgeräte-Kontrolleinheiten, bei Bedarf unter Zwischenschaltung einer Adapterlogik, überlagert wird, die funktionsorientierte Eingaben in Befehlssätze für die jeweilige Controllereinheit umsetzt.

## Beschreibung

Die vorliegende Erfindung betrifft ein Verfahren zur Integration unterschiedlicher Sensorik-/Aktorikelemente einer gegebenen Infrastruktur mit voneinander verschiedenen Schnittstellen und Ansprechverfahren in ein einheitliches Steuersystem.

Bei gegebenen Infrastrukturen ist es derzeit der Normalfall, daß eine Vielzahl von Sensorik-/Aktorikelementen einer Vielzahl von funktionsorientierten Vorrichtungen zugeordnet sind. Sensorik-/Aktorikelemente im Sinne der vorliegenden Erfindung sind alle ein- und ausgabefähigen Geräte, Regelkreise und Systeme, wozu Beleuchtungssysteme gehören, Klima-/Belüftungssysteme, Schattierungseinheiten, Heizungssysteme, Kommunikationssysteme, insbesondere umfassend Monitore, Kameras, Lautsprecher, Mikrofone für Überwachungs- und Notrufsysteme, Wasserführungs- und Pumpsysteme sowie Bildschirmarbeitsplätze, beispielsweise für Ansager und dergleichen. Dabei ist es auch geläufig, daß nicht nur die jeweiligen Geräte selbst, sondern auch die dazugehörigen Sensorik-/Aktorikelemente aus unterschiedlichen Beschaffungszeiträumen stammen, unterschiedlichen Generationen zugehören und über unterschiedlichste Schnittstellen und Ansprechverfahren verfügen.

Ein besonderer Anwendungsfall der vorliegenden Erfindung ist beispielsweise der Betrieb von Bahnhöfen der Bahnbetreiber, von denen es verteilt über ein Territorium eine große Anzahl gibt, so daß sich insgesamt die Anzahl hinsichtlich der Funktion zwar gleicher, aber hinsichtlich der Generation und Ansprechverfahren völlig unterschiedlicher Systeme beträchtlich erhöht. Bezogen auf eine Vielzahl unterschiedlicher wie oben beschriebener Funktionen ergeben sich aus steuerungstechnischer Sicht eine beträchtliche Zahl von Einzelgeräten, so daß ein erheblicher Aufwand an Personaleinweisung/-ausbildung, Wartung, Erneuerung, Regeneration und dergleichen zu betreiben ist.

Insbesondere hinsichtlich der Funktionssteuerung ist es wünschenswert, ein einheitliches und einfaches System zur Verfügung zu haben, so daß darauf eingewiesenes Personal praktisch standortunabhängig einsetzbar ist und/oder funktionsorientierte Vorgänge auch zentralisiert durchgeführt werden können.

Vergleichbare Anwendungsfälle ergeben sich insbesondere auch für andere Betreiber umfangreicher infrastruktureller Anlagen wie Flughafenbetreiber, Militär, Post, Krankenhäuser und dergleichen.

Ausgehend vom vorbeschriebenen Stand der Technik liegt der vorliegenden Erfindung die **Aufgabe** zugrunde, ein Verfahren bereitzustellen, welches eine Integration einer großen Vielzahl völlig unterschiedlicher Sensorik/Aktorikelemente einer gegebenen Infrastruktur in ein einheitliches Steuersystem ermöglicht und somit die Bedienung, Ansteuerung sowie gegebenenfalls Diagnostik in bezug auf die in das System integrierten Einheiten vereinheitlicht und erheblich vereinfacht.

Zur technischen **Lösung** dieser Aufgabe wird mit der Erfindung vorgeschlagen ein Verfahren zur Integration unterschiedlicher Sensorik/Aktorikelemente einer gegebenen Infrastruktur mit voneinander verschiedenen Schnittstellen und Ansprechverfahren in ein einheitliches Steuersystem, wobei eine einheitliche funktionsorientierte Ansteuerung einer Vielzahl von sensorik/aktorikelementebezogenen Endgeräte-Kontrolleinheiten, bei Bedarf unter Zwischenschaltung einer Adapterlogik, überlagert wird, die funktionsorientierte Eingaben in Befehlssätze für die jeweilige Controllereinheit umsetzt.

Der Erfindung liegt der Gedanke zugrunde, eine funktionsorientierte Ansteuerung zu schaffen, welche es ermöglicht, aktuelle Zustände abzufragen und Veränderungen anzuordnen sowie deren Durchführung zu überprüfen. In den Bereich der Abfrage aktueller Zustände gehören Sensorsignale ebenso wie Maschinenzustandssignale zu Zwecken der Diagnose. Die Veränderungen der Zustände werden üblicherweise durch eine vereinheitlichte Ansteuerung in einheitlicher Form durchgeführt. Durch das erfindungsgemäße Verfahren wird dabei eine als Standard verwendbare Basis geschaffen, durch die verschiedene Steuersysteme vereinheitlichbar sind, um beispielsweise ein einheitliches Steuersystem zu bilden. Die funktionsorientierte Ansteuerung ist gemäß einem vorteilhaften Vorschlag der Erfindung ereignisbezogen, so daß sich die Bedienperson keinerlei Gedanken über die dahinterstehenden zu bedienenden Geräte machen muß. Will sie beispielsweise eine Temperatur erhöhen oder verringern, muß sie sich keine Gedanken über die Frage machen, ob eine Heizung oder eine Klimaanlage anzusteuern ist. Will sie eine Schattierung bewirken oder einen Springbrunnen ansteuern, muß sie nicht wissen, das Jalousiemotoren oder eine Pumpe zu beschalten sind.

Allerdings ist die Erfindung nicht auf die Ereignisbezogenheit der Ansteuerungsoberfläche beschränkt. Auch ist es denkbar, die Oberfläche hinsichtlich der Funktionseinheiten so zu gliedern, daß eine einheitenbezogene Ansteuerung erfolgen kann, beispielsweise zur Ansteuerung von zu einer Funktionseinheit zusammengefaßten Endgeräten einer Informationsanlage, wie Anzeige- und Ansagegeräte eines Bahngleises.

Die Ansteuerungsoberfläche kann mittels Datenfernübertragung oder sonstigen Übertragungsmethoden einer Zentralsteuerung zugeordnet sein, so daß eine Vielzahl infrastruktureller Einheiten zumindest in bezug auf bestimmte Funktionen zentral ansteuerbar sind.

Auf der Infrastrukturseite befinden sich Sensorik-/Aktorikelemente beispielsweise Ventile, Motoren, Regelungen, Schalter und dergleichen. Diese werden gemäß der Erfindung durch eine elementbezogene Endgeräte-Kontrolleinheit angesteuert, welche in vorteilhafter Weise über eine sensorik-/aktorikelementbezogene Schnittstelle einerseits verfügt und eine schnittstellenartige Anbindung an die Adapterlogik. Die Endgeräte-Kontrolleinheit ist auf das jeweilige konkrete Endgerät abgestimmt und mit diesem in einem Signalaustausch, der vom Endgerät bewältigt werden kann. Andererseits erhält die Endgeräte-Kontrolleinheit von der Adapterlogik einen einheitenbezogenen Datenstrom, beispielsweise gesteuert über eine Adressierung, und filtert aus diesen die für das jeweilige konkrete Gerät erforderlichen Daten aus.

Die Adapterlogik ihrerseits setzt die eingehenden Befehle oder Anfragen um in einen gerätegruppenbezogenen Datenstrom, beispielsweise zur Ansteuerung von visuellen oder akustischen Endgeräten einer Einheit auf rein logischer Ebene, der einem bestimmten Protokoll unterliegt, so daß eine Vielzahl unterschiedlicher Endgeräte-Kontrolleinheiten für eine Vielzahl funktionsgleicher aber unterschiedlicher Endgeräte daraus die jeweiligen elementbezogenen Daten, d. h. die hinsichtlich eines Endgerätes zur physikalischen Steuerung geeigneten Daten, ausfiltern kann.

Dabei ist es von Vorteil, wenn gemäß einem Vorschlag der Erfindung die Adapterlogik auf eine Zentraldatenbank zugreifen kann, um die sensorik/aktorikelementbezogenen Informationen einzuholen, d. h., um beispielsweise das Datenprotokoll abzufragen, welches für das in der jeweiligen Infrastruktur befindliche Endgerät zu verwenden ist. Auf diese Weise kann die Adapterlogik bereits den Datenstrom vorformatiert an die Endgeräte-Kontrolleinheit bereitstellen.

Die erfindungsgemäße Ausgestaltung hat eine Vielzahl von Vorteilen. Zunächst einmal bietet sie eine einheitliche Ansteuerung, so daß einmal eingewiesenes Personal eine Vielzahl von infrastrukturellen Einheiten kontrollieren kann. Darüber hinaus bewirkt die Verwendung der Adapterlogik eine Befehlsumsetzung bzw. eine Signalumsetzung bezogen auf Kontrolleinheits-Gruppen, die ihrerseits funktionsgleichen oder funktionsähnlichen Endgeräten zugeordnet sind. Dadurch ist eine einheitliche, vereinfachte und zentralisierte Befehls- bzw. Signalumsetzung gegeben.

Ein weiterer Vorteil der Erfindung besteht darin, daß bei Austausch von Endgeräten nurmehr die Endgeräte-Kontrolleinheit angepaßt oder ausgetauscht werden muß, im übrigen aber sich hinsichtlich der Ansteuerung und der Adapterlogik nichts ändert.

Ein weiterer Vorteil der Erfindung besteht in der Möglichkeit, automatische Steuereinheiten zu ergänzen. So können beispielsweise zwischen Endgeräte-Kontrolleinheiten und Sensorik-/Aktorikelement automatische Steuerungen zum Ablauf infrastrukturseitiger Tagesroutinen und dergleichen vorgesehen sein, die durch die Kontrolleinheit gegebenenfalls übersteuerbar sind. Diese Einheiten können auch bereits in die Kontrolleinheit integriert sein oder sich sogar zentralisieren lassen, so daß die Adapterlogik diese zusätzlichen Steuereinheiten als alternative Eingabe auffaßt. Vorteilhafterweise sind dabei Zustandsinformationen der Sensorik-/Aktorikelemente erfaßbar und normierbar und die Sensorik-/Aktorikelemente selbst fernwartbar, so daß eine vereinfachte und zentralisierte Handhabung gegeben ist.

Weitere Vorteile und Merkmale der Erfindung ergeben sich aus der folgenden Beschreibung anhand der Figur. Dabei zeigt:

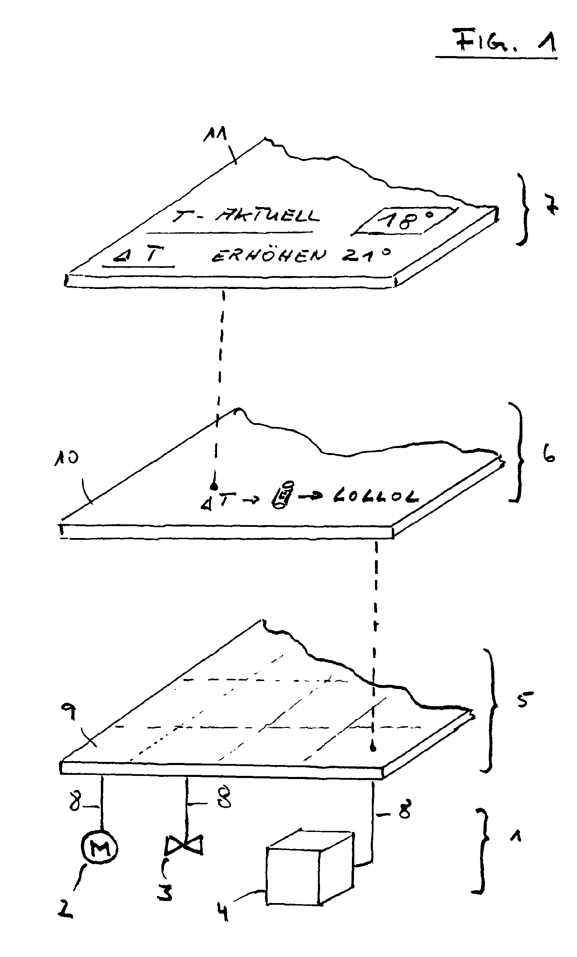

- Fig. 1: eine schematische Darstellung der verschiedenen Logikebenen für ein Ausführungsbeispiel der Erfindung.

In Fig. 1 ist eine Infrastrukturebene 1 gezeigt, umfassend Motoren 2, Ventile 3, Heizung-/Klimaeinheiten 4 und dergleichen. Diese Infrastrukturebene ist auf Infrastrukturobjekte und/oder Funktionsgruppen bezogen organisiert. Der Infrastrukturebene überlagert ist eine Ebene von Endgeräte-Kontrolleinheiten 5, wobei bezogen auf ein Endgerät oder eine Gruppe davon eine Kontrolleinheit 9 segmentiert ausgeführt ist. Dabei kann es sich um Einzeleinheiten handeln oder um Bestandteile einer Gesamtbaugruppe oder Gesamtlogikeinheit. Die Segmente 9 sind mit den entsprechenden infrastrukturseitigen Sensorik-/Aktorikelementen über Leitungen 8 verbunden, wobei es sich um Energieleitungen, Signalleitungen, Fernübertragungen und dergleichen handeln kann.

Der Endgeräte-Kontrolleinheiten-Ebene 5 überlagert ist die Ebene der Adapterlogik 6, welche baugruppenrealisiert oder logikrealisiert eine Einheit 10 bildet und die von einer funktionsorientierten Ansteuerungs-Ebene 7 erhaltenen Befehle umsetzt. Diese funktionsorientierte Ansteuerung 11 zeigt im gezeigten Ausführungsbeispiel die aktuelle Temperatur einer bestimmten Infrastruktureinheit sowie die funktionsorientierte Befehlszeile, diese Temperatur auf einen bestimmten Wert zu erhöhen. Dieser Befehl wird der Adapterlogik übergeben, welche aus mit standardisierten Werkzeugen administrierbaren Datenbanken und Programmabläufen eine Signalfolge bzw. Datenfolge erzeugt, welche an die jeweilige Adresse der jeweiligen Kontrolleinheit übergeben wird. Die Endgerätekontrolleinheit sendet im gezeigten Ausführungsbeispiel über die Signalleitung 8 einen entsprechenden Befehl, um die Heizung 4 hochzufahren.

Die einzelnen Ebenen können schaltungstechnisch oder auf Softwareebene realisiert werden. Wesentlich ist das Zusammenwirken einer einheitlichen funktionsorientierten Ansteuerung über eine bedarfsweise einsetzbare Adapterlogik mit Endgeräte-Kontrolleinheiten, um unterschiedlichste Geräte integrieren zu können, Generationswechsel erheblich zu vereinfachen und eine einheitliche Bedienung gewährleisten zu können.

Das beschriebene Ausführungsbeispiel dient nur der Erläuterung und ist nicht beschränkend.

### Bezugszeichenliste

- 1: Infrastrukturebene
- 2: Motor
- 3: Ventil
- 4: Heizung
- 5: Endgeräte-Kontrolleinheit-Ebene
- 6: Adapterlogik-Ebene
- 7: Ansteuerungs-Ebene
- 8: Leitung
- 9: Kontrolleinheit
- 10: Adapterlogik
- 11: Ansteuerung

## Patentansprüche

1. Verfahren zur Integration unterschiedlicher Sensorik-/Aktorikelemente einer gegebenen Infrastruktur mit voneinander verschiedenen Schnittstellen und Ansprechverfahren in ein einheitliches Steuersystem, wobei eine einheitliche funktionsorientierte Ansteuerung einer Vielzahl von sensorik/aktorikelementebezogenen Endgeräte-Kontrolleinheiten, bei Bedarf unter Zwischenschaltung einer Adapterlogik, überlagert wird, die funktionsorientierte Eingaben in Befehlssätze für die jeweilige Controllereinheit umsetzt.

2. Verfahren nach Anspruch 1, dadurch gekennzeichnet, daß die Ansteuerung ereignisbezogen ausgelegt und von einer sensorik/aktorikelementbezogenen Auswahllogik ergänzt wird.

3. Verfahren nach einem der vorhergehenden Ansprüche, dadurch gekennzeichnet, daß die Ansteuerung über eine Zentralsteuerung ansteuerbar ist.

4. Verfahren nach einem der vorhergehenden Ansprüche, dadurch gekennzeichnet, daß die Ansteuerung mittels Datenfernübertragung ansteuerbar ist.

5. Verfahren nach einem der vorhergehenden Ansprüche, dadurch gekennzeichnet, daß eine Endgerätekontrolleinheit eine auf das jeweilige Sensorik-/Aktorikelement abgestimmte Schnittstelle und eine allgemeine Adapterlogik-Schnittstelle aufweist.

6. Verfahren nach einem der vorhergehenden Ansprüche, dadurch gekennzeichnet, daß die Endgerätekontrolleinheit aus dem von der Adapterlogik zufließenden Datenstrom die für das jeweilige Sensorik/Aktorikelement erforderlichen Daten ausfiltert.

7. Verfahren nach einem der vorhergehenden Ansprüche, dadurch gekennzeichnet, daß die Endgerätekontrolleinheit die sensorik/aktorikelementbezogenen Daten an die Adapterlogik in einem standardisierten Protokoll bereitstellt.

8. Verfahren nach einem der vorhergehenden Ansprüche, dadurch gekennzeichnet, daß die Adapterlogik auf eine zentrale sensorik/aktorikelementbezogene Datenbank zugreift.

9. Verfahren nach einem der vorhergehenden Ansprüche, dadurch gekennzeichnet, daß in der zentralen sensorik-/aktorikelementbezogenen Datenbank Adapterprotokolle gespeichert sind.

10. Verfahren nach einem der vorhergehenden Ansprüche, dadurch gekennzeichnet, daß die Adapterlogik oder die Kontrolleinheiten um automatische Steuereinheiten ergänzt werden.

11. Verfahren nach einem der vorhergehenden Ansprüche, dadurch gekennzeichnet, daß Zustandsinformationen der Sensorik-/Aktorikelemente erfaßbar sind.

12. Verfahren nach einem der vorhergehenden Ansprüche, dadurch gekennzeichnet, daß Zustandsinformationen der Sensorik-/Aktorikelemente normierbar sind.

13. Verfahren nach einem der vorhergehenden Ansprüche, dadurch gekennzeichnet, daß Sensorik-/Aktorikelemente fernwartbar sind.

14. Verfahren nach Anspruch 8, dadurch gekennzeichnet, daß die Datenbank mit standardisierten Werkzeugen administrierbar ist.
